# EUROPEAN PATENT APPLICATION

(11) **EP 1 517 541 A2**
(43) Date of publication of application: **23.03.2005**
(21) Application number: 04104364.7
(22) Date of filing: 09.09.2004
(51) Int. Cl.: H04N 1/60

(54) **Displaying spot colors**

(30) Priority: 18.09.2003 JP 2003326716
(71) Applicant: Konica Minolta Medical & Graphic Inc., Tokyo 163-0512 (JP)
(72) Inventor: NAKAMORI, H. Konica Minolta Med. & Graphic, Inc., 192-8505, Tokyo (JP)
(74) Representative: Gille Hrabal Struck Neidlein Prop Roos

(57) **Abstract**

An image displaying apparatus for displaying an image based on image data containing a spot color on a displaying section in order to check a finish of a color proof. The apparatus includes: a display color setting section for previously setting and registering color information of a predetermined display color to be displayed on the displaying section; a color information detecting section for detecting color information of the spot color in the image data for the color proof; a color information setting section for setting the color information of the display color, which is previously set and registered, as the color information of the spot color when the color information of the spot color cannot be detected; and a display control section for controlling to display the spot color on the display section, based on the color information set by the color information setting section.

## Description

### BACKGROUND OF THE INVENTION

The present invention relates to an image displaying apparatus, image outputting system, image displaying method, computer program for executing the method thereof, and information recording medium for recording the computer program thereof. More particularly, this invention concerns an image displaying apparatus capable of allowing a predetermined displaying means to display a color proof image to check the finish thereof, prior to outputting the color proof for proofing printed matter; an image outputting system; an image displaying method; a computer program for executing the method thereof; and an information recording medium for recording the computer program thereof.

In the printing industry, it has been a common practice to check the layout of the final color printed matter, the finish of the letters and the like, and color tone, prior to actual printing, using a method of proof printing by a flat bed press or a method of obtaining a color image by contact multiple exposure between a film and silver halide material; then proofreading has been carried out.

With the rapid progress of digital technology in recent years, there has been widespread use of the DTP (DeskTop Publishing) technology where digital data is processed on a computer to perform prepressing work. Further, in the image outputting method, an image setter where digital image is formed directly on the film, and the CTP (Computer-To-Plate) technology are playing a central role. Encouraged by the trend of digitalization, DCCP (Direct Digital Color Proof) method has come in the mainstream in the creation of a proof for the color printed matter. A specific technique of DCCP method includes the technique of exposing an ink sheet to a laser beam, transferring an image and outputting a color proof (multicolor processing sample), and the technique of exposing a silver halide material to a laser beam and outputting a color proof, and these techniques are widely used. In the DCCP, a color proof is normally created based on the data with the color decomposed into C (cyan) plate, M (magenta plate), Y (yellow plate) and K (black) plate, as fundamental colors of printing ink.

The Patent Document 1 given below discloses an example of the apparatus based on the technique of exposing the ink sheet to a laser beam and transferring an image thereon. The apparatus described in this document contains an exposure section for exposing a donor sheet (ink sheet) loaded on the rotary drum to the laser beam modulated in response to the image information of the output image according to the control of the control section, and transferring the image on the receiver sheet with the coloring materials superimposed on one another. A color proof is outputted by such a procedure.

This technique uses the same paper as that used at the time of printing, and hence does not require the ground color of the paper to be processed. Color development on the color proof can be matched to that on the printed matter, by using an ink sheet consisting of the pigments conforming to the ink colors. This technique has these advantages as well as the disadvantage of requiring a set of ink sheets to be prepared for each type of ink. This raises problems of maintenance and cost. Further, accurate reproduction cannot be achieved by a combination of fundamental colors C, M, Y and K, so this technique cannot meet the output of the non-standard color (called spot color including a metallic or fluorescent color) specifically created by preparation of ink; therefore, spot colors are reproduced by combinations of fundamental colors based on the RIP (Raster Image Processor).

The Patent Document 2 discloses an example of the apparatus adopting the method of exposing the silver halide paper to a laser beam. The apparatus described in this document comprises an optical unit equipped with a red laser beam source, green laser beam source and blue laser beam source; a main scanning section equipped with a drum rotatably mounted for sucking the silver halide paper; and a sub-scanning section for scanning the optical unit in the direction orthogonal to the rotating direction of the drum. Processing of exposure is applied to the silver halide paper sucked by the drum, while the amount of laser beams R, G and B is adjusted, whereby a color proof is produced.

In the color proof using such silver halide paper, color development in each dot of C, M, Y and K is determined by the color development of a photosensitive layer, so the color tone and density may be different from those at the time of actual printing, due to the difference in color development method and type of paper. The impression of the colors reproduced on the color proof is made to conform to that of the actual printed matter, by changing the size of the dot and the proportion of mixing the fundamental colors C, M, Y and K using the RIP, without changing the color generating components. Such processing is referred to as color management.

Since the silver halide paper is used, the spot color can be reproduced approximately by adjusting and outputting the amount of laser beams R, G and B.

Recent years have witnessed the method of measuring the actual printed matter, determining the reproduction by C, M, Y and K in response to the result of this measurement exposing these colors, and controlling the amount of laser beam at the time of reproduction, thereby improving the reproduction accuracy of the color proof. The Patent Document 3 shows an example of the apparatus for outputting a color proof based on this technique. This apparatus is configured to use a colorimeter to measure each color patch constituting the color patch image printed according to the dot percentage data, and to acquire the correspondence between the coordinate value on the color space of the C, M, Y and K and coordinate value on the L*a*b* color space; at the same time, to use the colorimeter to measure each color patch constituting the color patch image created according to the image data of three colors R, G and B sequentially generated by the personal computer, and to acquire the correspondence between the coordinate value on the color space of the R, G and B and coordinate value on the L*a*b* color space. Based on these correspondences, the output of the color proof is controlled.

For the spot color, this apparatus is configured to acquire the correspondence between the spot color name and the coordinate value of the L*a*b* color space of the patch of the solid when the dot percentage is 100%, and to control the color proof output.

The color proof outputted by using the above-mentioned apparatus is characterized by excellent color reproducibility and precision proofing capabilities, on the one hand. On the other hand, it requires a considerably high cost. Therefore, it is preferred to minimize the time and effort of outputting a color proof in order to find out editing errors that can be checked by some other means, by eliminating unnecessary color proof output as far as possible.

In view of such requirements, one may sometimes use the technique of reproducing and displaying the image on a monitor, based on the image data (Bitmap data) immediately before the color proof is outputted. For example, Patent Document 4 discloses the image display method and apparatus thereof, wherein a spot color plate is distributed to the fundamental color plates (pseudo-color transformation) and texture transformation is performed, followed by RGB transformation, whereby the texture (density distribution representing the fine grain or feel of the material to the image displayed on the monitor) is provided, and the color tone of the displayed image is made to conform to that of the printed matter.

Further, Patent Document 5 discloses a proofing method for evaluating the continuity between the relevant pixel on the image under test and its surrounding pixels, in order to check the adequacy of the processing of the overlapped portion (where image data is processed so that there will be partial overlapping of the boundaries of the adjacent colors to ensure that a white area is not generated when plate misalignment has occurred during printing). If a discontinuous portion has been found out, a sheet is printed out to show the result of inspection where the relevant position is emphasized, whereby easy identification of the discontinuous position is provided.

Since the display on the monitor is normally provided RGB, the image data of fundamental colors and spot color must be transformed into the RGB format. Especially when the spot color is displayed, the corresponding display color is designated in advance and the portion of the spot color is represented in that display color alternatively, in some cases. Or in other cases, one uses the method of calculating the parameter of the fundamental color set as the image data of the spot color.

In many cases, the color gamut of the spot color is not included in the RGB color gamut of the monitor display.
There is a technological barrier that causes failure in faithful reproduction of the spot color. At present, a greater expectation is placed on a display technique for ensuring effective identification of each color on the monitor, rather than the effort for improving the reproducibility of the color (spot color in particular) by giving consideration to such a situation.

However, in many of the conventional methods, the principal object in view is to improve the reproducibility of color on the monitor, as in found in the example of the method and apparatus disclosed in Patent Document 4. After all, efforts are made to ensure a faithful reproduction of the colors whose identification is difficult in the RGB of the monitor. Further, various types of calculations are needed to ensure such a faithful representation. Problems remain in the practical use, as in the case of processing a large quantity of image data such as that used in the printing industry, wherein deterioration occurs in the response of processing.

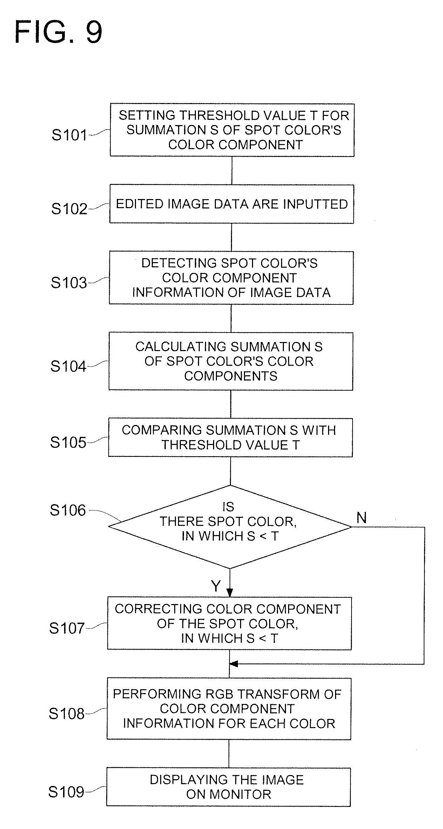

Further, when a spot color is not set as in the case of outputting in separate plates, a spot color is commonly represented in black. In this case, even if the overlapped portion as shown in Patent Document 5, has been emphasized, that portion cannot be clearly identified. In practical processing, this problem has been solved by changing the display color of the spot color after reading the spot color once. However, this method is disadvantageous from the viewpoint of processing speed.
[Patent Document 1] Official Gazette of Japanese Patent Tokkaihei 6-328752 ([0028] and [0035] in Specification, Figs. 9 and 16
[Patent Document 2] Official Gazette of Japanese Patent Tokkaihei 11-205622 ([0003] through [0007], [0024], [0025], [0036], [0056] in Specification
[Patent Document 3] Official Gazette of Japanese Patent Tokkai 2001-157074 ([0043] through [0054] in Specification)
[Patent Document 4] Official Gazette of Japanese Patent Tokkaihei 9-252415 (Claim and [0024] in Specification)
[Patent Document 5] Official Gazette of Japanese Patent Tokkai 2000-246862 (Claim and Fig. 2)

In view of the prior art described above, it is an object of the present invention to provide an image displaying apparatus, image outputting system, image displaying method, computer program for executing the method thereof and information recording medium with the computer program recorded thereon, wherein, even if it is impossible to get the color information for representing the spot color contained in a color proof, that spot color can be displayed on a display means such as a monitor.

Another object of the present invention is to provide an image displaying apparatus, image outputting system, image displaying method, computer program for executing the method thereof and information recording medium with the computer program recorded thereon, wherein the aforementioned identification of the spot color represented on a display means can be improved.

### SUMMARY OF THE INVENTION

The aforementioned object can be achieved by the invention having the following features:
(1) An image displaying apparatus for displaying an image based on image data containing a spot color on a displaying section in order to check a finish of a color proof formed based on the image data, the image displaying apparatus including: a display color setting section for previously setting and registering color information of a predetermined display color to be displayed on the displaying section; a color information detecting section for detecting color information of the spot color in the image data for the color proof; a color information setting section for setting the color information of the predetermined display color, which is previously set and registered by the display color setting section, as the color information of the spot color when the color information of the spot color cannot be detected by the color information detecting section; and a display control section for controlling to display the spot color on the display section, based on the color information set by the color information setting section.
(2) The image displaying apparatus described in item (1), wherein the color information of the display color previously set and registered by the display color setting section is color information of a color having a color difference of a predetermined value or more with respect to a process color for forming the color proof.
(3) The image displaying apparatus described in item (2), wherein the display section is configured to display an image based on three primary colors, R, G and B; and the color information of the display color previously set and registered by the display color setting section is at least one of color information of a color having color component mainly including R, color information of a color having color component mainly including G, and color information of a color having color component mainly including B.
(4) The image displaying apparatus described in any one of (1) through (3), wherein the display color setting section is capable of setting and registering color information of plural predetermined display colors by determining a priority order; and if there is a plurality of spot colors whose color information cannot have been detected by the color information detecting section, the color information setting section sets color information of each of the predetermined display colors for each of the plurality of spot colors in response to the priority order.
(5) An image displaying apparatus for displaying an image based on image data containing a spot color on a displaying section in order to check a finish of a color proof formed based on the image data, the image displaying apparatus including: a color information detecting section for detecting color information of the spot color in the image data for the color proof; a lightness evaluation section for evaluating whether or not the spot color has a lightness of a predetermined value or more, based on the color information of the spot color detected by the color information detecting section; a color correcting section for correcting the color information of the spot color evaluated by the lightness evaluation section as not having the lightness of the predetermined value or more, to ensure that the lightness will be the predetermined value or more; and a display control section for controlling to display the spot color on the display section, based on the color information of the spot color corrected by the color information correcting section.
(6) An image displaying apparatus for displaying an image based on image data containing a spot color on a displaying section in order to check a finish of a color proof formed based on the image data, the image displaying apparatus including: a color information detecting section for detecting color information of the spot color in the image data for the color proof; a chroma evaluation section for evaluating whether or not the spot color has a chroma of a predetermined value or more, based on the color information of the spot color detected by the color information detecting section; a color correcting section for correcting the color information of the spot color evaluated by the chroma evaluation section as not having the chroma of the predetermined value or more, to ensure that the chroma will be the predetermined value or more; and a display control section for controlling to display the spot color on the display section, based on the color information of the spot color corrected by the color information correcting section.

### BRIEF DESCRIPTION OF THE DRAWINGS

Fig. 1 is a schematic block diagram representing an example of the overall configuration of an image outputting system as an embodiment of the present invention;
Fig. 2 is a conceptual drawing representing an example of the display color information set by an example of the image outputting system as an embodiment of the present invention;
Fig. 3 is a drawing representing an example of processing by the color information setting section of the image displaying apparatus of the image outputting system of the present invention;
Fig. 4 is a drawing representing an example of processing by the display control section of the image displaying apparatus of the image outputting system of the present invention;
Fig. 5 is a flowchart representing an example of processing by the image outputting system of the present invention;
Fig. 6 is a flowchart representing an example of processing by the image outputting system of the present invention;
Fig. 7 is a schematic block diagram representing an example of the configuration of an image display apparatus of the image outputting system of the present invention;
Fig. 8 is a drawing representing an example of processing by the color information correcting section of the image display apparatus of the image outputting system of the present invention; and
Fig. 9 is a flowchart representing an example of processing by the image outputting system of the present invention.

### DETAILED DESCRIPTION OF THE PREFERRED EMBODIMENT

The aforementioned object can be achieved further by the invention having the following features:
(7) An image outputting system including: a color proof outputting apparatus for outputting a color proof based on image data containing a spot color; and an image displaying apparatus for displaying an image based on the image data, on a display section in order to check the finish of the color proof; wherein the image displaying apparatus includes: a display color setting section for previously setting and registering color information of a predetermined display color to be displayed on the displaying section; a color information detecting section for detecting color information of the spot color in the image data for the color proof; a color information setting section for setting the color information of the predetermined display color, which is previously set and registered by the display color setting section, as the color information of the spot color when the color information of the spot color cannot be detected by the color information detecting section; and a display control section for controlling to display the spot color on the display section, based on the color information set by the color information setting section.
(8) An image outputting system including: a color proof outputting apparatus for outputting a color proof based on image data containing a spot color; and an image displaying apparatus for displaying an image based on the image data, on a display section in order to check the finish of the color proof; wherein the image displaying apparatus includes: a color information detecting section for detecting the color information of the spot color in the image data for the color proof; a lightness evaluation section for evaluating whether or not the spot color has a lightness of a predetermined value or more, based on the color information of the spot color detected by the color information detecting section; a color correcting section for correcting the color information of the spot color evaluated by the lightness evaluation section as not having the lightness of the predetermined value or more, to ensure that the lightness will be the predetermined value or more; and a display control section for controlling to display the spot color on the display section, based on the color information of the spot color corrected by the color information correcting section.
(9) An image outputting system including: a color proof outputting apparatus for outputting a color proof based on image data containing a spot color; and an image displaying apparatus for displaying an image based on the image data, on a display section in order to check the finish of the color proof; wherein the image displaying apparatus includes: a color information detecting section for detecting the color information of the spot color in the image data for the color proof; a chroma evaluation section for evaluating whether or not the spot color has a chroma of a predetermined value or more, based on the color information of the spot color detected by the color information detecting section; a color correcting section for correcting the color information of the spot color evaluated by the chroma evaluation section as not having the chroma of the predetermined value or more, to ensure that the chroma will be the predetermined value or more; and a display control section for controlling to display the spot color on the display section, based on the color information of the spot color corrected by the color information correcting section.
(10) An image displaying method for displaying an image based on image data containing a spot color on a displaying section in order to check a finish of a color proof formed based on the image data, the image displaying method including the steps of: previously setting and registering color information of a predetermined display color to be displayed on the displaying section; detecting color information of the spot color in the image data for the color proof; setting the color information of the display color, which is previously set and registered, as the color information of the spot color when the color information of the spot color cannot be detected by the step of detecting the color information; and controlling to display the spot color on the display section, based on the color information set by the step of setting the color information.
(11) An image displaying method for displaying an image based on image data containing a spot color on a displaying section in order to check a finish of a color proof formed based on the image data, the image displaying method including the steps of: detecting color information of the spot color in the image data for the color proof; evaluating whether or not the spot color has a lightness of a predetermined value or more, based on the color information of the spot color detected by the step of detecting the color information; correcting the color information of the spot color evaluated by the step of evaluating as not having the lightness of the predetermined value or more, to ensure that the lightness will be the predetermined value or more; and controlling to display the spot color on the display section, based on the color information of the spot color corrected by the step of correcting the color information.
(12) An image displaying method for displaying an image based on image data containing a spot color on a displaying section in order to check a finish of a color proof formed based on the image data, the image displaying method including the steps of: detecting color information of the spot color in the image data for the color proof; evaluating whether or not the spot color has a chroma of a predetermined value or more, based on the color information of the spot color detected by the step of detecting the color information; correcting the color information of the spot color evaluated by the step of evaluating as not having the chroma of the predetermined value or more, to ensure that the chroma will be the predetermined value or more; and controlling to display the spot color on the display section, based on the color information of the spot color corrected by the step of correcting the color information.
(13) A computer program for allowing a computer to execute the image displaying method described in any one of (10) through (12).
(14) An information recording medium with the computer program described in (13) recorded thereon.

### (EFFECTS OF THE INVENTION)

According to the image displaying apparatus described in (1), image outputting system described in (7) and image displaying method described in (10), the present invention is configured in such a way that, if the color information of a spot color cannot be obtained, the color information for that spot color is automatically set and the spot color is displayed on a monitor, based on this color information. Even if the color information of a spot color cannot be obtained, the spot color can be displayed on the monitor.

According to the image displaying apparatus described in (2) or (3), the color information of the color having a greater color difference than the process color can be set as the color information of the spot color. This arrangement allows clear identification of this spot color on the monitor.

According to the image displaying apparatus described in (4), even if it is not possible to get the color information of multiple types of spot colors contained in the color proof for image display, the color information can be set in a preferable manner according to the predetermined order of priority for each spot color.

According to the image displaying apparatus described in (5), image outputting system described in (8) and image displaying method described in (11), the present invention is configured in such a way that the lightness of the spot color displayed on the monitor is evaluated, and control is provided to increase the lightness if it has been evaluated as insufficient. This arrangement improves the identification of the spot color on the monitor.

According to the image displaying apparatus described in (6), image outputting system described in (9) and image displaying method described in (12), the present invention is configured in such a way that the chroma of the spot color displayed on the monitor is evaluated, and control is provided to increase the chroma if it has been evaluated as insufficient. This arrangement improves the identification of the spot color on the monitor.

Referring to the drawings, the following describes the details of an example of an embodiment of the image outputting system of the present invention: This image outputting system is designed to output a color proof for proofing of printed matter. Before outputting, a color proof image is displayed on the screen by a display section, and inspection is made to see whether or not the image data contains any error. This arrangement of the system avoids the waste of outputting a color proof including an edit error.

The image outputting system to be described below contains an image displaying apparatus that provides control so as to display an image on the display section before the color proof is outputted. This image outputting apparatus has the computer program of the present invention installed through the information recording medium of the present invention, and the image displaying method is implemented by this arrangement. Various modifications of the present invention are possible; for example, the computer program of the present invention is stored on the server on the network, and the program is downloaded from the image displaying apparatus.

### [Features of image outputting system and definition of terminology]

The image outputting system of the present invention has a function of presetting and registering the color information for representation of a spot color through the displaying section. When the color information cannot be identified, for example, when the color information of the spot color cannot be acquired from the image data of the inputted color proof, the aforementioned color information preset and registered is used to display the spot color on the displaying section. Further, the color information meeting a predetermined condition is preset and registered, whereby the identification of the spot color to be displayed is improved.

The "color information" in the sense in which it is used here refers to the data that determines the color development of the color that can be represented on the color proof and displaying section. The density, coordinate values of L*, a* and b* in the L*a*b* color space, the numerical values of C, M, Y and K, and the numerical values of R, G and B constitute specific examples. Of these pieces of color information, the information that represents the relevant colors in the form decomposed into predetermined color components is called "color component information" or "color component" for short.

### [Embodiment 1]

The following describes the overall configuration of the image outputting system as a first embodiment of the present invention, detailed configuration of each component and system operation in that order. When the inputted image data does not contain the color information of the spot color or the data cannot be identified, the image outputting system of the present embodiment allows the spot color to be displayed clearly, even if the color information of the spot color is not specified.

### [Overall configuration of image outputting system]

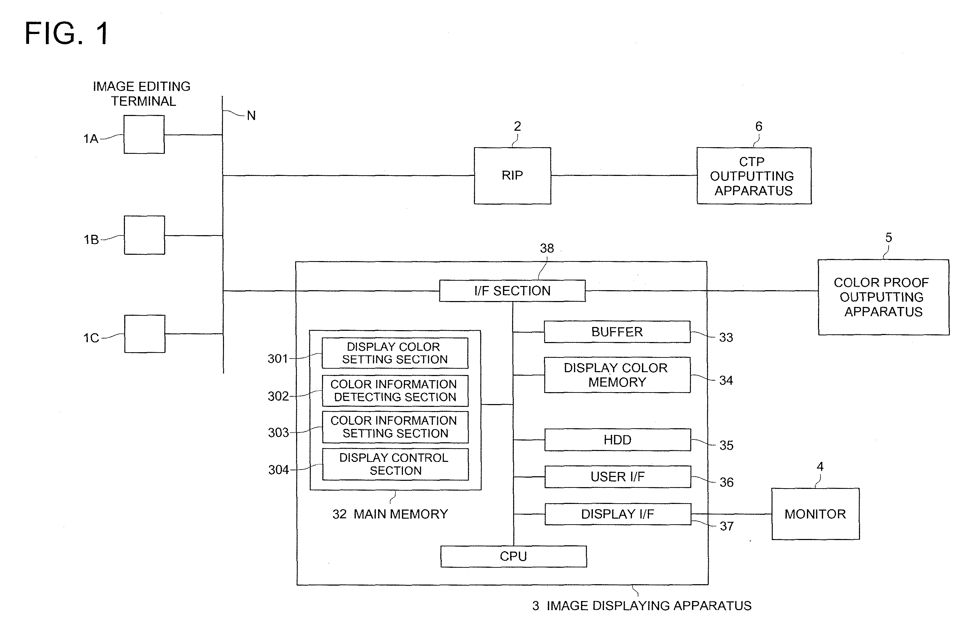

Fig. 1 is a schematic block diagram representing an example of the overall configuration of an image outputting system in the present embodiment. As shown in Fig. 1, the image outputting system contains an image editing terminals 1A through 1C, RIP (Raster Image Processor) 2, image displaying section 3, monitor 4 and color proof outputting apparatus 5. The image editing terminals 1A through 1C and image displaying section 3 are connected via the LAN, WAN and network N such as the Internet.

This system is further provided with a CTP (Computer to Plate) outputting apparatus 6 that forms an image directly on the plate according to the image data sent from the RIP 2. The plate outputted from the CTP outputting apparatus 6 is installed on a predetermined printing machine, and printing operation is carried out, whereby printed matter is produced. The image outputting system of the present embodiment is designed to display the image in such a way as to check the finish of the color proof used for proofing of the plate of this printed matter.

### [Configuration of image editing terminal]

The image editing terminals 1A through 1C consist of computer terminals incorporating the application software for dividing the image data of printed matter into multiple pieces of color plate information and editing it, using the DTP technique. It includes such an image inputting device as an image scanner, in addition to the computer proper, keyboard and monitor. Normally a plurality of these image editing terminals are provided. (In the present embodiment, three image editing terminals 1A through 1C are arranged, but it goes without saying that only one terminal or any desired number of terminals can be arranged). The image data edited by the image editing terminals 1A through 1C is normally sent to the RIP 2 through the network N. It is also possible to arrange such a configuration that this image data is sent to both the RIP 2 and image displaying apparatus 3.

### [RIP configuration]

The RIP 2 is a processor for receiving the image data serving as a basis for the electronic printing plate for the printed matter edited by the image editing terminals 1A through 1C, through the network N, and for transforming the characters and image data into a bit map while scanning them. It is capable of field-sequential generation of the dot image data of each of C (cyan), (M) magenta, (Y) yellow and K (black) as fundamental colors in the raster image format.

The image data generated by the RIP 2 is in a file format consisting of the color plates of C, M, Y, K and spot color, and each color plate file is assigned with the color plate name as a file name. For example, the C-plate file is assigned with the file name of "Cyan", the M-plate file with the file name of "Magenta", the Y-plate file with the file name of "Yellow", the K-plate file with the file name of "Black", and the spot color plate file with the file name of "SpotColor N". (Here N = 1, 2, ..... indicate the identification numbers of spot colors. For example, N = 1 indicates silver metallic, and N = 2 denotes fluorescent pink). The C-, M-, Y- and K-plate files will be collectively called a fundamental color plate file. Here the file name is not restricted to such a form. For example, the spot color plate may be assigned directly with such spot color names as "Silver metallic" or "fluorescent pink".

The image data generated from the RIP 2 need not be in such a file format as formed for each color plate. To give an example of one variant, the image data generated by the RIP 2 is formed as one piece of image data, and can be configured so as to specify the data configuration capable of arranging the data on each color plate in the relevant image data, using a predetermined string of characters (e.g. the same string of characters as the aforementioned file names can be adopted).

### [Configuration of image displaying apparatus]

The image displaying section 3 is an information processing apparatus incorporating a predetermined operation program, and is equipped with a computer proper and keyboard, as usual. The image displaying section 3 is also connected with the monitor 4 ("displaying section" of the present invention) that forms and displays an image using three primary colors of R (red), G (green) and B (blue). It can display the image data to be processed by the image displaying section 3. It is also possible to use the image displaying section 3 composed integrally with the monitor. This image displaying section 3 transforms the dot image data acquired from RIP 2 through the network N, into the exposure-based format that can be processed by the color proof outputting apparatus 5. The image displaying section 3 also controls the amount of laser light for exposition, based on the exposure format, generates the output control signal for outputting a color proof, and sends it to the color proof outputting apparatus 5 together with the transformed image data. The present embodiment adopts a system configuration containing the color proof outputting apparatus 5. However, without installing the color proof outputting apparatus 5, it is also possible to arrange such a configuration that the edited image is displayed on the monitor 4, and is checked.

An example of the configuration is shown in Fig. 1. As shown, the image displaying section 3 consists of a CPU 31 for applying processing of a predetermined calculation and control; a main memory 32 such as a RAM wherein the program run by this CPU 31 and the data used for calculation and control are expanded; a buffer 33 for temporarily storing the image data sent from the RIP 2 and adjusting the timing of processing; and a display color memory 34 for saving the information on a predetermined display color (to be described later) displayed by the monitor 4. Further, the image displaying section 3 is provided with the display interface (display I/F) 37 for controlling the image display by the monitor 4.

The buffer 33 has a memory area for storing the image data of a C-plate file, M-plate file, Y-plate file, K-plate file and spot color-plate file. These files are stored in the corresponding memory files.

It is also possible to make such arrangements that the information on a predetermined display color is stored in an HDD 35 (to be described later), without providing a display color memory 34.

The image displaying section 3 is provided with an HDD (Hard Disk Drive) 35, user interface (user I/F) 36 and interface section (I/F section) 38. The HDD 35 is a nonvolatile storage device for storing the OS, operation program, various types of data, application software and others. The user I/F 36 contains the keyboard and mouse employed by a user to perform various operations and inputting data. Further, user I/F 38 contains an interface circuit for the processing of inputting the image data sent from the RIP 2 and outputting the image data and output control signal to be sent to the color proof output apparatus 4. It is also possible to arrange such a configuration that an interface circuit for inputting and an interface for outputting are provided separately from each other.

The image displaying section 3 copies the computer program stored in the HDD 35, to the main memory 32, and the CPU 31 runs the copied computer program (constituting various sections to be described later), whereby the functions of the present invention are performed. This computer program is recorded in advance on an information recording medium such as a floppy (registered trademark) disk, CD-ROM and DVD-ROM, and this is installed on the image transforming apparatus 3. Then the program can be run on the image transforming apparatus 3.

The main memory 32 stores the computer program by CPU 31 control, copied from the HDD 35, for performing the functions of a display color setting section 301, color information detecting section 302, color information setting section 303 and display control section 304.

The display color setting section 301 is a computer program that performs the functions of setting and registering the color information (called display color information) on a predetermined display color that can be displayed on the monitor 4, and storing it in the display color memory 34. The CPU 31 for running this computer program constitutes the display color setting section of the present invention. By running the display color setting section 301, the CPU 31 displays the input screen for setting and inputting the display color using the user I/F 36, on the monitor 4, and stores the display color information set from this input screen, in the display color memory 34. It is also possible to arrange such a configuration that the display color information on adequate display colors is stored into the display color memory 34 in advance so that the setting operation by the user can be omitted. Means may also be provided to ensure that the display color information is acquired through the network.

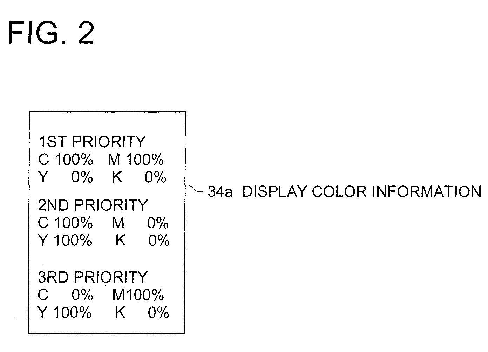

Fig. 2 shows an example of the display color information set by running the display color setting section 301. The display color information of the first, second and third priorities are set and registered in the display color information 34a shown in Fig. 2. The display color information of the first priority indicates blue (B) consisting of a 100% C-color component, 100% M-color component, and 0% Y- and K-color components. The display color information of the second priority indicates the green (G) consisting of a 100% C-color component, 100% Y-color component, and 0% M- and K-color component. The display color information of the third priority indicates the red (R) consisting of a 100% M-color component, 100% Y-color component, and 0% C- and K-color component. Any desired number of the types of the display color information can bee set and registered, and the order of priority can also be set as desired.

Comparison of the color components indicates that R, G and B colors each have a greater color difference than the process colors C, M, Y and K. When displayed on the monitor 4, a sharp distinction is drawn from the process colors. In addition to R, G and B, colors having greater color difference than the C, M, Y and K can be set and registered. For example, the color with R as a major color, that with G as a major color and that with B as a major color can be adopted.

The aforementioned order of priority is preferred to be such that the colors of the same series are not arranged continuously. For example, the first priority is assigned to R, the second priority to G, the third priority to B, the fourth priority to the color with R as a major component (R ≠ 100%), the fifth priority to the color with G as a major component (G ≠ 100%), and the sixth priority to the color with B as major component (B ≠ 100%). This method of ordering prevents the colors representing different spot colors from being overlapped or becoming similar to one another, when a plurality of spot colors are indicated on the monitor 4.

The color information detecting section 302 is a computer program for detecting the color components of the C, M, Y, K and spot color forming the image data sent from the RIP 2. The CPU 31 for running this program constitutes the color information detecting section of the present invention. By running the color information detecting section 302, the CPU 31 works in such a way that the color component information contained in a C-plate file, M-plate file, Y-plate file, K-plate file and one or more spot color-plate files sent from the RIP 2 is stored in a predetermined area inside the main memory 32.

The color information setting section 303 is a computer program for selecting and setting the display color information serving as an alternative data for the color component information of a certain spot color, out of multiple pieces of the display color information stored in the display color memory 34, when the color information detecting section 302 has failed to detect the color component of that spot color. The CPU 31 running this computer program constitutes the color information setting section of the present invention. The CPU 31 detects that the color component information of the spot color is not stored in the main memory 32, despite the operation of the color information detecting section 302. Based on the result of this detection, the CPU 31 runs the color information setting section 303. It selects the display color information as the aforementioned alternative data, from the display color information stored in the display color memory 34, and sets it as the color information of the spot color, thereby forming the image data.

The above-mentioned "has failed to detect the color component of that spot color" refers to various cases, for example, where the color component information in the spot color plate file cannot be recognized or the part or whole of its color component information is missing. To put it another way, it refers to all cases where the color component information of the spot color cannot be acquired, for whatever reason (except for the case where the color proof does not include the spot color).

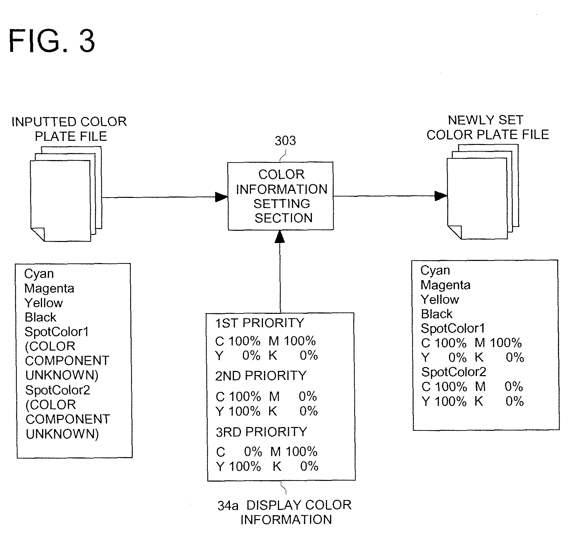

Fig. 3 shows an example of the function of the CPU 31 running the color information setting section 303. Here the display color information 34a shown in Fig. 2 is used. As indicated by the overview shown in Fig. 3, the image data inputted from the RIP 2 consists of a C-plate file (file name: Cyan), M-plate file (file name: Magenta), Y-plate file (file name: Yellow), K-plate file (file name: Black) and spot color-plate file (file name: SpotColor 1). In this case, the color components stored in the spot color files 1 and 2 are assumed as unclear for some reasons as mentioned above. It should be noted that the number of the spot color files is not restricted to two.

When the spot color files 1 and 2 cannot be detected by running the color information detecting section 302, the CPU 31 starts to run the color information setting section 303. By running the color information setting section 303, the CPU 31 selects the display color information from the display color information 34a stored in the display color memory 34. The selection of the display color is carried out according to the order of priority determined in advance. To put it more specifically, the color component of the display color of the first priority is assigned to the spot color file 1, and the color component of the display color of the second priority is assigned to the spot color file 2, with the result that a new color plate file is set.

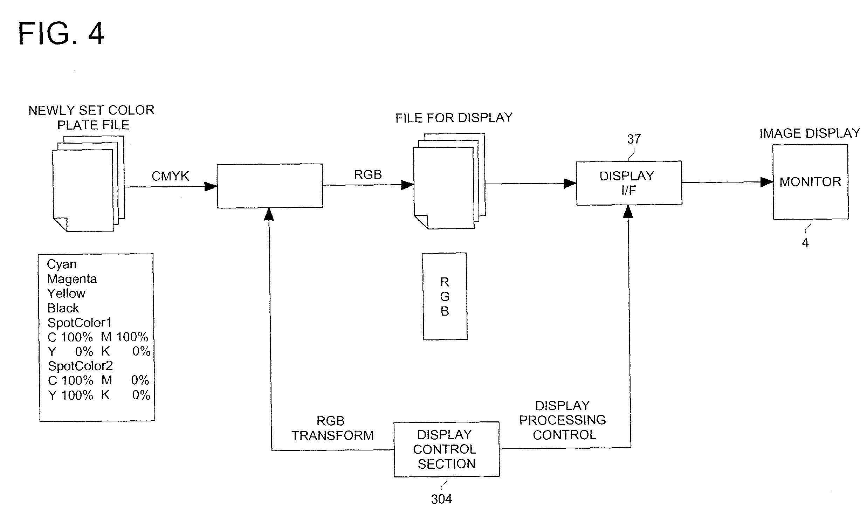

The display control section 304 is a computer program that, when being run by the CPU 31, provides control in such a way that the monitor 4 consisting of the color plate file newly set by the color information setting section 303 is displayed on the monitor 4. The CPU 31 running this computer program constitutes the display control section of the present invention. To put it in greater details, as shown in Fig. 4, the CPU 31 runs the display control section 304, thereby applying R, G and B transformation to the above-mentioned newly set color plate file, which is transformed into the display file ("R", "G" and "B"). Based on this display file, the CPU 31 controls the display I/F 37 so as to display the data on the monitor 4.

### [Operation and effect of image outputting system]

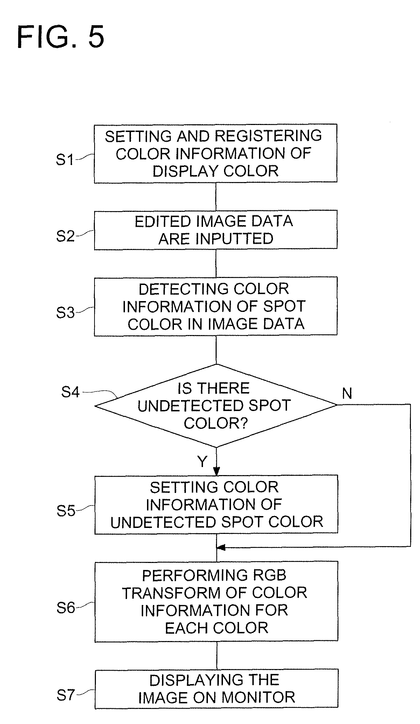

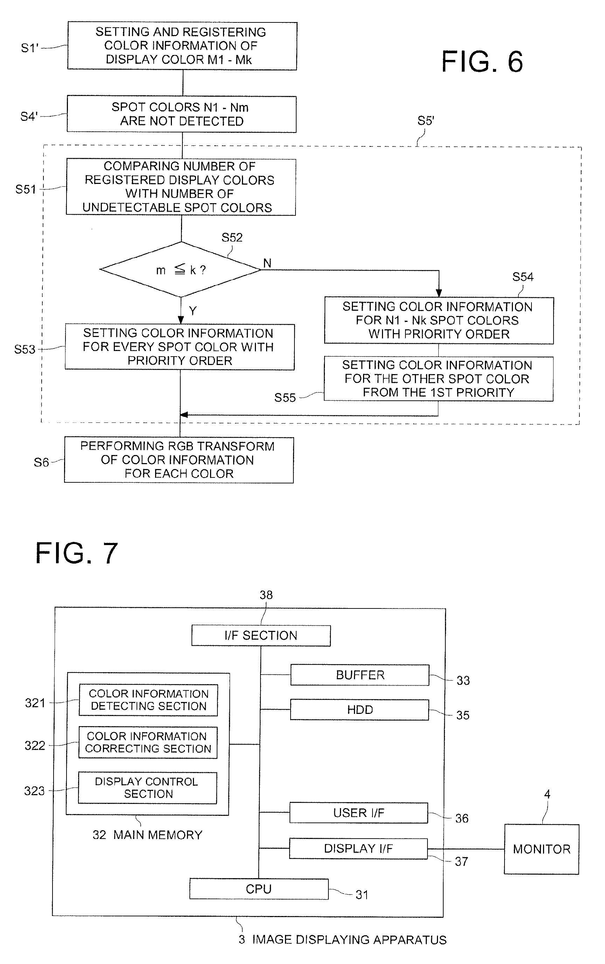

The following describes the operation and effect of image outputting system having the above-mentioned arrangements, with reference to the flowcharts of Figs. 5 and 6: The flowchart of Fig. 5 shows the flow of the process for monitor display of the color proof image by the image outputting system of the present invention. The flowchart of Fig. 6 indicates a specific example of part of the processing shown in Fig. 5.

As shown in the flowchart of Fig. 5, the CPU 31 runs the display color setting section 301 to set and register the display color, and the registered display color is stored in the display color memory 34 as display color information (S1). When the image data edited by the image editing terminals 1A through 1C is inputted into the image displaying section 3 through processing by the RIP 2 (S2), the color information detecting section 302 detects the color information of the spot color contained in the image data (S3).

When there is any spot color whose color information cannot be detected by running the color information detecting section 302 (Y in S4), the CPU 31 runs the color information setting section 303. Based on the above-mentioned display color information display color memory 34, the CPU 31 allows the color information of that spot color to be set (S5). Further, the CPU 31 runs the display control section 304 and applies processing of RGB transformation to the color information of the spot color set by running the color information setting section 303. At the same time, it also applies the processing of RGB transformation to the color information of other color late files (fundamental color plate file and the spot color plate file of the spot color whose color information has been successfully detected) (56).

In the meantime, if there is no spot color whose color information cannot be detected (N in S4), the fundamental color plate file and spot color plate file are subjected to RGB transformation (S6).

If the spot color plate file is not included in the inputted image data, the fundamental color plate file forming the image data is subjected to RGB transformation, as in the case of regular processing.

In the final stage, the CPU 31 runs the display control section 304, and controls the I/F section 38, based on the image data having been subjected to RGB transformation, so that the image is displayed on the monitor 4 (S7).

The flowchart of Fig. 6 shows an example of processing by the CPU 31 when running the color information setting section 303. This processing assumes that k types of display color information (where k ≥ 1) are set and registered as display color information as a result of running of the color information setting section 303 (S1'). It is also assumed that m types of spot color (where m ≥ 1) cannot be detected as a result of running the color information detecting section 302 (S4'). In this case, the display colors having been set and registered are expressed as M1 through Mk according to the order of priority. The spot colors that cannot be detected are expressed as SpotColor N1 through Nm (where Ni < Nj, 1 ≤ i < j ≤ k).

The following describes the processing (S5') by the CPU 31 when running the color information setting section 303, to cope with the above-mentioned situation: In the first place, the color information setting section 303 is run to make comparison (S51) between the number of display colors registered in S1' (hereinafter referred to as "number of registered display colors", and the number of spot colors that cannot be detected in S4' (hereinafter referred to as "number of undetected spot colors").

If m ≤ k (Y in S52), i.e. if the number of undetected spot colors is smaller than the number of registered display colors, the CPU 31 running the color information setting section 303 sets the color information for all the spot colors that cannot be detected. In this case, the color information of the display color M1 of the first priority is assigned to the spot color of the SpotColor N1, and the color information of the display color M2 of the second priority is assigned to the spot color of the SpotColor N2. The color information of the display color Mm of the m-th priority is assigned to the spot color of the SpotColor Nm. In other words, the color information of the display color Mi of the i-th priority is assigned to the spot color of SpotColor Ni (where 1 ≤ i ≤ m) (S53). The color information of each color is subjected to RGB transformation by running the display control section 304 (S6).

In the meantime, when m > k (N in S52), i.e. when the number of undetected spot colors is greater than the number of registered display colors, pieces of the color information of display colors M1 through Mk are assigned to the SpotColors N1 through Nk according to the order of priority (S54). Then pieces of color information are set to other SpotColor N (k + 1) through Nm, starting from the display color of the first priority (S55). In other words, the SpotColors N (k + 1) through Nm are assigned with pieces of the color information of display colors from the first priority to the (m - k)-th display color in that order.

If m > 2k, k types of display color are repeated set α number of times until m - αk ≤ k is reached. The remaining spot colors are assigned with pieces of the color information of display colors M1 through M ((α + 1) k - m) in the order of priority.

Upon termination of the aforementioned processing by running the color information setting section 303, the display control section 304 is run, whereby the color information of each color is subjected to RGB transformation (S6).

The aforementioned processing minimizes the duplication of colors by using the registered display colors, even if there are a great number of spot colors displayed on the monitor 4.

It is more preferred to avoid duplication of the aforementioned colors by setting and registering sufficiently many display colors.

The aforementioned embodiment is arranged in such a way as to set the color component information of the spot color plate file decomposed into color components C, M, Y and K. When the image displaying apparatus is designed to perform processing by transforming each color plate file into the color information such as the coordinate value of the L*a*b* color space, density or RGB, the color information setting section 303 can be configured to set the color information of the spot color plate file consisting of forms of color information to be transformed. For example, when L*a*b* transformation is applied to the color component information of the spot colors consisting of the C, M, Y and K color components, and the color information consisting of the L*a*b* coordinate value is processed, the display color expressed in terms of a predetermined coordinate value of the L*a*b* is assigned with the order of priority and is set and registered in advance, by running the color information detecting section 302. The spot color whose color component cannot be detected by executing the color information detecting section 302 is assigned with this display color, and the spot color is displayed on the monitor, using the assigned display color. Such a configuration is also possible. Further, when the display color is set and registered by the color information such as C, M, Y and K, the aforementioned color component information can be transformed into the L*a*b*, for example, and assigned to the spot color.

According to the aforementioned image outputting system of the present embodiment, even if the color information of the spot color cannot be obtained from the inputted image data, the spot color can be represented on the monitor 4.

The R, G and B having a greater color difference than the fundamental colors C, M, Y and K, and the color mainly consisting thereof are set and registered as display colors, whereby improved identification of the spot color on the monitor 4 is ensured.

Further, a sharp distinction is drawn among different spot colors displayed on the monitor 4, by setting the order of priority in such a way as to avoid continuation of similar colors.

### [Embodiment 2]

The following describes another embodiment of the present invention: The image outputting system as a second embodiment of the present invention is arranged in such a way that, when the lightness and chroma of the spot color included in the image data is low, predetermined processing is applied to the image data to ensure easy identification of the spot color on the monitor, whereby easy checking of the finish of the computer program is provided. The image outputting system has almost the same configuration as that of the image outputting system described as the first embodiment. Accordingly, the same reference numbers will be assigned to the same components, unless otherwise specified. For the details, reference should be made to the description of the first embodiment.

As shown in Fig. 1, the image outputting system as the second embodiment is so arranged that the RIP 2 is used to process the image data edited by the image editing terminals 1A through 1C, and the processed image data is displayed on the monitor 4 by the image displaying section 3.

### [Configuration of image outputting apparatus]

Fig. 7 is a schematic block diagram representing an example of the approximate configuration of the image displaying section 3 of the present embodiment. The image displaying section 3 comprises a CPU 31, main memory 32, buffer 33, HDD 35, user I/F 36, display I/F 37 and I/F section 38. The main memory 32 stores the computer program by CPU 31 control, copied from the HDD 35, for performing the functions of a color information detecting section 321, color information correcting section 322 and display control section 323.

Similarly to the color information detecting section 302 in the first embodiment, the color information detecting section 321 is a computer program for detecting the color components of the C, M, Y, K and spot color forming the image data sent from the RIP 2. The CPU 31 for running this program constitutes the color information detecting section of the present invention. By running the color information detecting section 321, the CPU 31 works in such a way that the color component information contained in a C-plate file, M-plate file, Y-plate file, K-plate file and spot color-plate file sent from the RIP 2 is stored in a predetermined area inside the main memory 32.

The color information correcting section 322 is a computer program for correcting the color component information of the file having been detected by running the color information detecting section 321, especially that of the spot color plate file. The CPU 31 for running this program constitutes the color information correcting section of the present invention. By running the color information correcting section 322, the CPU 31 works corrects the color components as follows: In the first place, the user interface is employed to set the threshold value of the sum total of the color components of the C, M, Y and K of the spot color plate file to be inputted. In this case, the threshold value of the mere sum total of the aforementioned color components may be set. Alternatively, it is possible to assign a predetermined weight to each color component, and set the threshold value when the sum total of the color components with their weights integrated has been obtained. (For example, assume the weight of C is "a", that of M "b", that of Y "c" and that of K "d". Also assume that the C component of the spot color is x%, M component y%, Y component z% and K component w%. Then the threshold value of (a x x + b x y + c x z + d x w) is "T"). In this case, it is also possible to arrange such a configuration that the threshold value may be set so as to acquire the data through the network or information storage medium. In the interest of simplicity, the following describes the case of adopting the threshold value of the mere sum total (x + y + z + w in the aforementioned example) of the spot components of the spot colors.

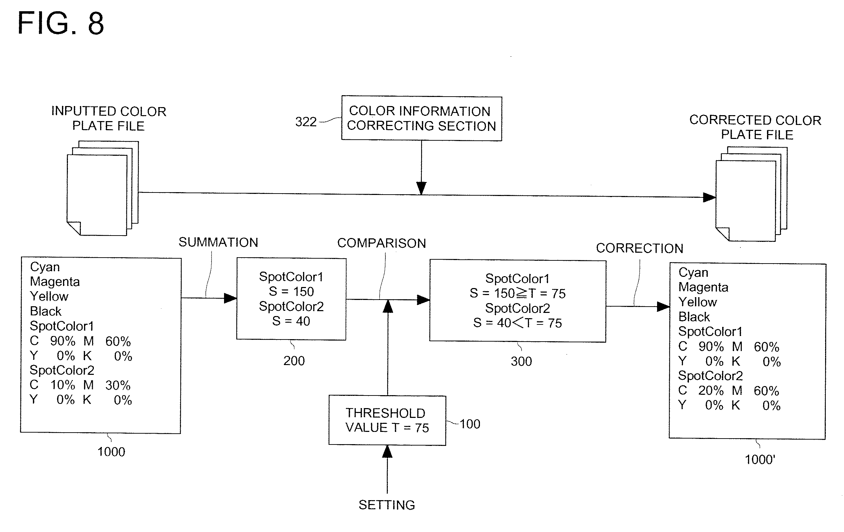

Fig. 8 is a drawing representing an example of processing by the CPU 31 when running the color information correcting section 322. In the first place, the threshold value T = 75 is reset (The value of T can be set as appropriate, on condition that an insufficient amount of lightness and chroma can be ensured when represented on the monitor 4), and is stored in the HDD 35 (reference numeral 100 in Fig. 8). The color information correcting section 322 calculates the sum total S of the color components of the spot colors detected by running the color information detecting section 321. In the color component information 1000 of the inputted color plate file shown in Fig. 8, the color components of the spot color SpotColor 1 consist of a 90% C-color component, 60% M-color component, and 0% Y- and K-color components, while the color components of the spot color 2 consist of 10% C-color component, 30% M-color component, and 0% Y- and K-color components. The sum total information of the color information of each spot color indicated by the numeral 200 consists of the sum total S = 150 for the spot color SpotColor 1, and the sum total S = 40 for the spot color SpotColor 2.

The CPU 31 for executing the color information correcting section 322 compares the set threshold value T = 75 with the sum total S of spot colors (300 in Fig. 8). For the spot color where the sum total S is equal to or greater than threshold value T, as in the spot color SpotColor 1 (i.e. S ≥ T), the color component is not corrected in conformity to the setting condition for threshold value T such that the lightness and chroma can be ensured in for display on the monitor. (See the color component information 1000' of the corrected color plate file).

For the spot color where the sum total S is smaller than the threshold value T, as in the spot color SpotColor 2 (i.e. S < T), the color components are corrected since the lightness and chroma when represented on the monitor 4 are insufficient, and visibility is not enough. Color components can be transformed in various ways. In the processing shown in Fig. 8, the value is corrected to the value obtained by multiplying the same factor to each color component until the sum total of the color component reaches the threshold value T or more. The color component of C in the spot color SpotColor 2 is changed from 10% to 20%, and that of M in the spot color SpotColor 2 is changed from 30% to 60% (where Y and K components remain 0%). In other words, assume that a certain spot color has an x% C-component, y% M-component, z% Y-component and w% K-component (x + y + z + w < T). Using a positive integer r such that the r x (x + y + z + w) ≥ T and (r - 1) x (x + y + z + w) < T, the C-component of this spot color is changed to r x x%, the M-component to r x y%, the Y-component to r x z%, and the K-component to r x w%. Use of such a form of transformation allows the lightness and chroma to be increased, with the ratio of inputted color components maintained unchanged. This arrangement improves the identification of display on the monitor without affecting the reproducibility of the spot color. It should be noted that the maximum value that can be taken by each color component is 100% when the threshold value T > 100 is set.

As described above, the CPU 31 executing the color information correcting section 322 constitutes the lightness evaluation section and chroma evaluation section of the present invention. Another specific method for evaluating the lightness and chroma of the spot color is to transform the spot color from the representation by the C, M, Y and K color components, to the representation by coordinate value of the L*a*b* color space. For lightness, a threshold value T1 is determined, based on the coordinate value of the L*. If L* < T1, the lightness of the spot color is evaluated as insufficient, and color information is corrected. For chroma, the threshold value Ts is determined, based on the a* and b*. If the {(a*) ^2 + (b*) ^2} ^ (1/2) < Ts, the chroma of the spot color is evaluated as insufficient, and color information is corrected.

The display control section 323 is a computer program run by the CPU 31 (as the display control section of the present invention), whereby control is provided in such a way that the image is displayed on the monitor 4, using the spot color plate file whose color component is changed by the execution of the color information correcting section 322, the spot color plate file whose color component is not changed, and the fundamental color plate file (See Fig. 4).

### [Operation and effect of image outputting system]

The following describes the operation and effect of the image outputting system equipped with the image displaying section 3 characterized by the aforementioned configuration, with reference to the flowchart of Fig. 9:

The user I/F 36 is used to set the threshold value T of the sum total of the color component forming the color component information of the spot color plate file (S101). When the image data edited by the image editing terminals 1A through 1C is inputted into the image displaying section 3 through the processing by the RIP 2 (S102), the CPU 31 executes the color information detecting section 321 to detect the color information of the spot color contained in the image data (S103).

By running the color information correcting section 322, the CPU 31 calculates the sum total S of the color component of the spot color plate file (S104) and compares the calculated sum total S with the threshold value T (S105). When a spot color plate file is included, the sum total is calculated for each spot color plate file.

If there is a spot color such that the sum total S of the color component is smaller than the threshold value T (i.e. S < T), (Y in S106), each color component of that spot color is changed so that the sum total of the color component will be greater (S107). For the spot color where the sum total S ≥ threshold value T, the color component is not changed.

Further, by running the display control section 304, the CPU 31 changes into the RGB data, the color component information of the spot color where the color component has been changed by execution of the display control section 323. At the same time, the CPU 31 also changes the RGB data into the color component information of other colors (color component of each fundamental color, and the color component of the spot color that has not been changed by the color information correcting section 322) (S108).

If a spot color plate file is not included in the inputted image data, RGB transformation is applied to the fundamental color plate file constituting the image data, as in regular processing.

In the final phase, the CPU 31 runs the display control section 304 and controls the I/F section 38 based on the RGB-transformed image data, so that the image will be displayed on the monitor 4 (S109).

According to the image outputting system having the aforementioned configuration, if identification of the spot color is insufficient under the conditions of lightness and chroma of the spot color constituting the image displayed on the monitor, the lightness and chroma can be corrected to improve the identification.

When the spot color plate files consisting of C, M, Y and K are processed after having been transformed into such a form as the coordinate values in the L*a*b* color space, densities or RGB data, the present embodiment allows the color information correcting section 322 to be configured so as to change the color information in such a form.

The aforementioned configurations of the present invention refer only to a few examples of the embodiments, and can be embodied in a great number of variations with appropriate modification or additions without departing from the technological spirit and scope of the invention claimed.

## Claims

1. An image displaying apparatus for displaying an image based on image data containing a spot color on a displaying section in order to check a finish of a color proof formed based on the image data, the image displaying apparatus comprising:
a display color setting section for previously setting and registering color information of a predetermined display color to be displayed on the displaying section;
a color information detecting section for detecting color information of the spot color in the image data for the color proof;
a color information setting section for setting the color information of the predetermined display color, which is previously set and registered by the display color setting section, as the color information of the spot color when the color information of the spot color cannot be detected by the color information detecting section; and
a display control section for controlling to display the spot color on the display section, based on the color information set by the color information setting section.

2. The image displaying apparatus of claim 1, wherein the color information of the display color previously set and registered by the display color setting section is color information of a color having a color difference of a predetermined value or more with respect to a process color for forming the color proof.

3. The image displaying apparatus of claim 2, wherein the display section is configured to display an image based on three primary colors, R, G and B; and the color information of the display color previously set and registered by the display color setting section is at least one of color information of a color having color component mainly including R, color information of a color having color component mainly including G, and color information of a color having color component mainly including B.

4. The image displaying apparatus of any one of claims 1 to 3, wherein the display color setting section is capable of setting and registering color information of plural predetermined display colors by determining a priority order; and if there is a plurality of spot colors whose color information cannot have been detected by the color information detecting section, the color information setting section sets color information of each of the predetermined display colors for each of the plurality of spot colors in response to the priority order.

5. An image displaying apparatus for displaying an image based on image data containing a spot color on a displaying section in order to check a finish of a color proof formed based on the image data, the image displaying apparatus comprising:
a color information detecting section for detecting color information of the spot color in the image data for the color proof;
a lightness evaluation section for evaluating whether or not the spot color has a lightness of a predetermined value or more, based on the color information of the spot color detected by the color information detecting section;
a color correcting section for correcting the color information of the spot color evaluated by the lightness evaluation section as not having the lightness of the predetermined value or more, to ensure that the lightness will be the predetermined value or more; and
a display control section for controlling to display the spot color on the display section, based on the color information of the spot color corrected by the color information correcting section.

6. An image displaying apparatus for displaying an image based on image data containing a spot color on a displaying section in order to check a finish of a color proof formed based on the image data, the image displaying apparatus comprising:
a color information detecting section for detecting color information of the spot color in the image data for the color proof;
a chroma evaluation section for evaluating whether or not the spot color has a chroma of a predetermined value or more, based on the color information of the spot color detected by the color information detecting section;
a color correcting section for correcting the color information of the spot color evaluated by the chroma evaluation section as not having the chroma of the predetermined value or more, to ensure that the chroma will be the predetermined value or more; and
a display control section for controlling to display the spot color on the display section, based on the color information of the spot color corrected by the color information correcting section.

7. An image outputting system comprising:
a color proof outputting apparatus for outputting a color proof based on image data containing a spot color; and
an image displaying apparatus for displaying an image based on the image data, on a display section in order to check the finish of the color proof; wherein the image displaying apparatus comprises:
a display color setting section for previously setting and registering color information of a predetermined display color to be displayed on the displaying section;
a color information detecting section for detecting color information of the spot color in the image data for the color proof;
a color information setting section for setting the color information of the predetermined display color, which is previously set and registered by the display color setting section, as the color information of the spot color when the color information of the spot color cannot be detected by the color information detecting section; and
a display control section for controlling to display the spot color on the display section, based on the color information set by the color information setting section.

8. An image outputting system comprising:
a color proof outputting apparatus for outputting a color proof based on image data containing a spot color; and
an image displaying apparatus for displaying an image based on the image data, on a display section in order to check the finish of the color proof; wherein the image displaying apparatus comprises:
a color information detecting section for detecting the color information of the spot color in the image data for the color proof;
a lightness evaluation section for evaluating whether or not the spot color has a lightness of a predetermined value or more, based on the color information of the spot color detected by the color information detecting section;
a color correcting section for correcting the color information of the spot color evaluated by the lightness evaluation section as not having the lightness of the predetermined value or more, to ensure that the lightness will be the predetermined value or more; and
a display control section for controlling to display the spot color on the display section, based on the color information of the spot color corrected by the color information correcting section.

9. An image outputting system comprising:
a color proof outputting apparatus for outputting a color proof based on image data containing a spot color; and
an image displaying apparatus for displaying an image based on the image data, on a display section in order to check the finish of the color proof; wherein the image displaying apparatus comprises:
a color information detecting section for detecting the color information of the spot color in the image data for the color proof;
a chroma evaluation section for evaluating whether or not the spot color has a chroma of a predetermined value or more, based on the color information of the spot color detected by the color information detecting section;
a color correcting section for correcting the color information of the spot color evaluated by the chroma evaluation section as not having the chroma of the predetermined value or more, to ensure that the chroma will be the predetermined value or more; and
a display control section for controlling to display the spot color on the display section, based on the color information of the spot color corrected by the color information correcting section.

10. An image displaying method for displaying an image based on image data containing a spot color on a displaying section in order to check a finish of a color proof formed based on the image data, the image displaying method comprising the steps of:
previously setting and registering color information of a predetermined display color to be displayed on the displaying section;
detecting color information of the spot color in the image data for the color proof;
setting the color information of the display color, which is previously set and registered, as the color information of the spot color when the color information of the spot color cannot be detected by the step of detecting the color information; and
controlling to display the spot color on the display section, based on the color information set by the step of setting the color information.

11. An image displaying method for displaying an image based on image data containing a spot color on a displaying section in order to check a finish of a color proof formed based on the image data, the image displaying method comprising the steps of:
detecting color information of the spot color in the image data for the color proof;
evaluating whether or not the spot color has a lightness of a predetermined value or more, based on the color information of the spot color detected by the step of detecting the color information;
correcting the color information of the spot color evaluated by the step of evaluating as not having the lightness of the predetermined value or more, to ensure that the lightness will be the predetermined value or more; and
controlling to display the spot color on the display section, based on the color information of the spot color corrected by the step of correcting the color information.

12. An image displaying method for displaying an image based on image data containing a spot color on a displaying section in order to check a finish of a color proof formed based on the image data, the image displaying method comprising the steps of:
detecting color information of the spot color in the image data for the color proof;
evaluating whether or not the spot color has a chroma of a predetermined value or more, based on the color information of the spot color detected by the step of detecting the color information;
correcting the color information of the spot color evaluated by the step of evaluating as not having the chroma of the predetermined value or more, to ensure that the chroma will be the predetermined value or more; and
controlling to display the spot color on the display section, based on the color information of the spot color corrected by the step of correcting the color information.

13. A computer program for allowing a computer to execute the image displaying method of any one of claims 10 to 12.

14. An information recording medium in which the computer program of claim 13 is recorded.
